# EUROPÄISCHE PATENTANMELDUNG

(11) **EP 0 544 211 A1**
(43) Veröffentlichungstag der Anmeldung: **02.06.1993**
(21) Anmeldenummer: 92119927.9
(22) Anmeldetag: 23.11.1992
(51) Int. Cl.: A01D 34/70, A01D 43/00

(54) **Rotorpresse für Rasenmäher**

(30) Priorität: 23.11.1991 DE 4138569; 28.01.1992 DE 4202293
(71) Anmelder: Eggenmüller, Alfred, Dr., D-89275 Elchingen (DE)
(72) Erfinder: Eggenmüller, Alfred, Dr., D-89275 Elchingen (DE)
(74) Vertreter: Fiener, Josef

(57) **Zusammenfassung**

Zu einer sicheren Weiterleitung des gemähten Gutes zu einem Sammelbehälter bei gleichzeitig kompakter Anordnung und einfacher Bauweise wird eine Rotorpresse (24) für Rasenmäher (200) vorgeschlagen, wobei zwischen der Umlaufbahn der Mähmesser (22) und dem Umlaufraum (24') des Zinkenrotors (25) eine horizontal ausgerichtete Trennwand (31) vorgesehen ist.

## Beschreibung

Die Erfindung betrifft eine Rotorpresse für Rasenmäher mit wenigstens einem umlaufenden Mähmesser, über dessen Umlaufbahn zumindest teilweise ein Zinkenrotor mit wenigstens einem Zinken angeordnet ist und einem sich an den Zinkenrotor anschließenden Förderkanal, der in einen Behälter mündet.

Eine derartige Rotorpresse für Rasenmäher ist aus dem US-Patent 4,986,063 bekannt, wobei die Rotorpresse in Form eines Zinkenrotors mit einer Vielzahl von starr daran befestigten Zinken in Höhenrichtung etwas versetzt über der Umlaufbahn, jedoch in Fahrtrichtung hinter der Umlaufbahn der Mähmesser angeordnet ist. Durch diese Anordnung der Rotorpresse im wesentlichen an der Rückseite des Rasenmähers ergibt sich zwar ein guter Materialfluß, jedoch führt dies zu einer Vergrößerung der Gesamtlänge des Rasenmähers. Da zudem die relativ schwere Rotorpresse hinter der Hinterachse des Rasenmähers angeordnet ist, kann dies bei zunehmender Beladung des Sammelbehälters zu einer Entlastung des vorderen Endes des Rasenmähers führen, so daß die maximale Beladung des Behälters begrenzt ist. Dies gilt insbesondere, wenn der Behälter nicht über dem Rasenmäher angeordnet ist, sondern sich in Fahrtrichtung gesehen hinter den Rasenmäher erstrecken würde, wie dies zum Abnehmen des Sammelbehälters zweckmäßig wäre.

Desweiteren ist aus dem US-Patent 5,070,683 eine Vorrichtung zum Mulchen von Gras oder Laub bekannt, wobei ein ähnlicher Zinkenrotor verwendet wird, der am rückseitigen Ende des Rasenmähers angeordnet ist. In einer weiteren Ausführungsform wird die Anordnung des Zinkenrotors ganz oder teilweise über der Umlaufbahn der Mähmesser beschrieben, so daß eine relativ kompakte Vorrichtung geschaffen wird. Hierbei kann sich jedoch das Problem ergeben, daß das abgemähte Gras von den Mähmessern direkt auf den Zinkenrotor geschleudert wird, wobei nur ein Teil auf die Förderflächen der Zinken gelangt, während ein Teil der abgeschleuderten Grasmenge auf die Rückseite der Förderflächen gelangen kann, so daß dieser Grasanteil zu Boden fällt. Bei der hier beschriebenen Mulchvorrichtung ist dies nicht weiter von Bedeutung, da beim Mulchen ohnehin die Ablage des gemähten Grases auf dem Boden angestrebt wird. Soll jedoch das Gras in einem Behälter gesammelt werden, ist dieser zu Boden fallende Anteil des gemähten Grases nicht erwünscht.

Demzufolge liegt der Erfindung die Aufgabe zugrunde, eine Rotorpresse für einen Rasenmäher zu schaffen, die eine sichere Weiterleitung des gemähten Grases bei gleichzeitig kompakter Anordnung und einfacher Bauweise ermöglicht.

Diese Aufgabe wird gelöst durch eine Rotorpresse mit den Merkmalen des Patentanspruches 1.

Durch die Anordnung einer Trennwand zwischen dem kammerartigen Umlaufraum der Rotorpresse und der Umlaufbahn der Mähmesser in im wesentlichen horizontaler Ausrichtung wird erreicht, daß der Anteil der direkt auf den Zinkenrotor geschleuderten Grasmenge nicht zu Boden fallen kann, sondern sich auf der horizontal ausgerichteten Trennwand sammeln kann, um somit beim nächsten Durchlauf der Zinken des Zinkenrotors mitgenommen zu werden. Diese "zweietagige Bauweise" hat zudem den erheblichen Vorteil, daß trotz der im wesentlichen kontinuierlichen Zuförderung der Grasmenge zu der Rotorpresse nur wenige Zinken benötigt werden, insbesondere nur noch ein einziger Zinken, da während der Umlaufbewegung des Zinkenrotors über einen Winkel von ca. 300° keine Förderung erfolgen braucht, sondern das Material auf der Trennwand angesammelt wird und dann taktweise in den Förder- oder Preßkanal weitergeschoben wird. Gegenüber den bekannten Zinkenrotoren mit einer Vielzahl von Zinken ergibt sich somit durch die Ausführung mit nur noch wenigen oder nur noch einem einzigen Zinken eine erhebliche Reduzierung des Herstellungsaufwandes.

Durch diese Anordnung von nur noch einem einzigen oder nur noch wenigen Zinken an dem Zinkenrotor ist außerdem die Wurfbahn des Grasmaterials in Richtung des Förder- oder Preßkanals weitgehend frei, so daß das Gras durch die Mähmesser bis weit in den Preßkanal hineingeworfen werden kann und somit weitere Antriebsenergie für die Weiterförderung in den Behälter eingespart werden kann.

Durch die Anordnung von nur noch einem oder ganz wenigen Zinken kann zudem der Zinkenrotor schneller umlaufen, so daß Untersetzungsgetriebe eingespart werden können. So kann beispielsweise bei der stehenden Anordnung der Rotorpresse die senkrechte Welle des Zinkenrotors unmittelbar von einem Riementrieb für den Mähmesserantrieb mit angetrieben werden, so daß aufwendige Reduktionsgetriebe eingespart werden können. Zudem kann durch die Anordnung der Trennwand die Rotorpresse bis nahe an das Zentrum des Rasenmähers, nämlich etwa direkt hinter die Mähmesserwelle angeordnet werden, so daß sich eine gleichmäßige Gewichtsverteilung ergibt, was insbesondere für handgeführte Rasenmäher bei Hanglagen des zu mähenden Rasens von Vorteil ist.

Außerdem ergibt sich durch die Anordnung der Trennwand an der Unterseite des Zinkenrotors ein glatter, stufenloser Übergang zu dem Förder- oder Preßkanal und eine versteifende Ausführung, so daß das Gehäuse der Rotorpresse trotz geringer Materialstärken als sehr stabiles Bauteil gefertigt werden kann. Zudem kann durch den von der Trennwand aus ansteigenden Förder- oder Preßkanal und die nach oben versetzte Rotorpresse die Hinterachse für den Fahrantrieb des Rasenmähers unter dem Preßkanal hindurchgeführt werden, so daß sich ein einfacher, leicht bauender Antrieb ergibt.

In bevorzugter Ausführung des Zinkenrotors mit stehender Antriebswelle ist die untenliegende Stirnwand des Pressengehäuses zugleich die Trennwand zu der Umlaufbahn der Mähmesser hin, so daß sich eine weitere Reduzierung des Bauaufwandes ergibt, da die Trennwand durch die Erstreckung über das Zentrum des Zinkenrotors hinaus eine Lagerstelle des Zinkenrotors bilden kann und zugleich einstückig und stufenlos in den Förderkanal übergehen kann.

Weitere vorteilhafte Ausgestaltungen sind Gegenstand der abhängigen Ansprüche. Nachfolgend werden mehrere Ausführungsbeispiele der Erfindung anhand der Zeichnungen näher erläutert und beschrieben.

Es zeigen:
- Fig. 1: einen Rasenmäher in Seitenansicht mit einer über der Umlaufbahn der Mähmesser liegenden Rotorpresse;
- Fig. 2: eine Draufsicht gemäß Fig. 1;
- Fig. 3: eine Seitenansicht auf eine abgewandelte Ausführungsform der Rotorpresse; und
- Fig. 4: eine Draufsicht gemäß Fig. 3.

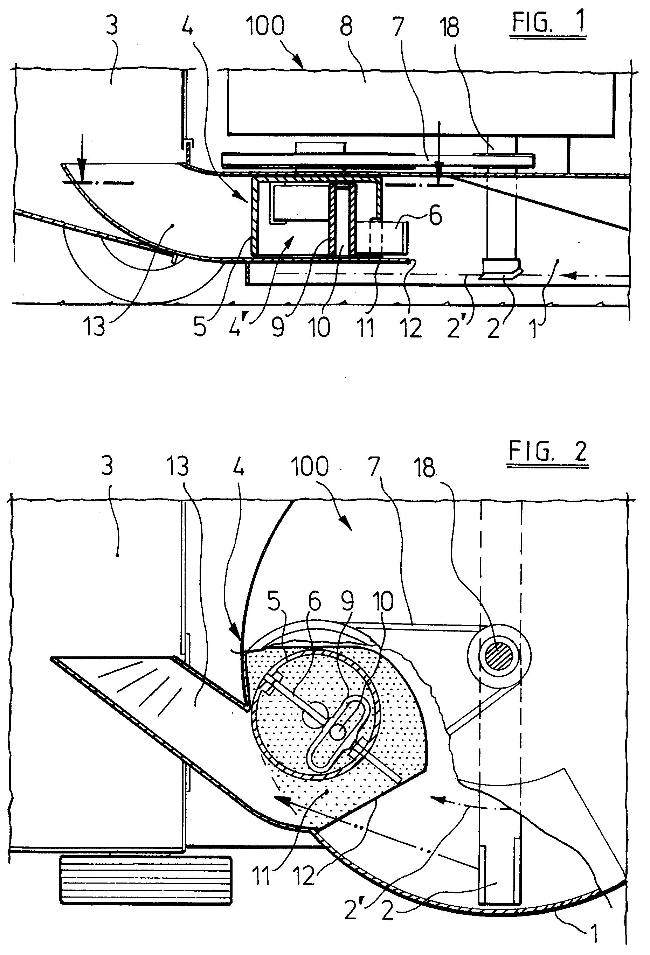

In Fig. 1 und 2 ist ein Rasenmäher 100 dargestellt, in dessen flachzylindrischem Gehäuse 1 ein oder mehrere Mähmesser 2 in horizontaler Umlaufbahn 2' umlaufen, wie dies in Strichpunktlinien angedeutet ist. Über dieser Umlaufbahn 2' und vor einem Sammelbehälter 3 ist ein zylindrischer Umlaufraum 4' einer Rotorpresse 4 angeordnet, die hier im wesentlichen aus einem aufrecht stehenden Rotor 5 besteht, der hier lediglich zwei radial ausgerichtete Zinken 6 aufweist. Diese werden über einen Riementrieb 7 vom Antriebsmotor 8 aus angetrieben. Die Förderzinken 6 werden in radialer Richtung durch eine Kurbelschleife 9 und einen exzentrisch angeordneten Bolzen 10 gesteuert, der stationär an einer horizontal angeordneten Trennwand 11 angeordnet ist. Bei der Umlaufbewegung des Rotors 5 werden die Zinken 6 in radialer Richtung durch diese Exzentersteuerung vorgeschoben bzw. zurückgezogen. Hierdurch wird von den Mähmessern 2 abgeschleudertes Gras, das über eine vordere Einlaufkante 12 geschleudert wird, auf der Trennwand 11 in Richtung eines Preß- oder Förderkanales 13 gefördert, der etwa zentral in den Sammelbehälter 3 einmündet.

In Fig. 2 ist die Draufsicht gemäß Fig. 1 dargestellt, wobei ersichtlich ist, daß die doppelt strichpunktiert dargestellte Wurfbahn des abgemähten Grasmaterials sich weit in den Preß- oder Förderkanal 13 erstrecken kann, da bei dieser Rotorpresse 4 nur sehr wenige Zinken 6 im Eingriff sind. Das direkt in den Förder- oder Preßkanal 13 geschleuderte Gut kann sich hierbei auch auf der unteren horizontalen Trennwand 11 (punktiert dargestellt) ablagern und ansammeln, so daß es dann durch den umlaufenden Zinken 6 mitgenommen wird. Die Einlaufkante 12 als vordere Begrenzungskante der im wesentlichen horizontal ausgerichteten Trennwand 11 ist hier in etwa radialer Ausrichtung zu einer Antriebswelle 18 der Mähmesser 2 geradlinig ausgebildet, jedoch kann diese auch entsprechend dem Umlaufkreis der Spitzen der Zinken 6 gekrümmt ausgeführt sein. Hierdurch wird erreicht, daß das auf die Trennwand 11 abgeschleuderte und für Sekundenbruchteile sich ablagernde Gut sicher mitgenommen wird und nicht zu Boden fallen kann. Es sei darauf hingewiesen, daß die in Strichpunktlinien eingezeichnete Umlaufbahn 2' der Mähmesser 2 mit geringem Spiel unterhalb der Trennwand 11 und der Einlaufkante 12 hindurch verläuft, so daß ggfs. an dem Mähmesser 2 anhaftendes Gras von der Einlaufkante 12 abgestreift und ebenfalls auf die Trennwand 11 gefördert würde.

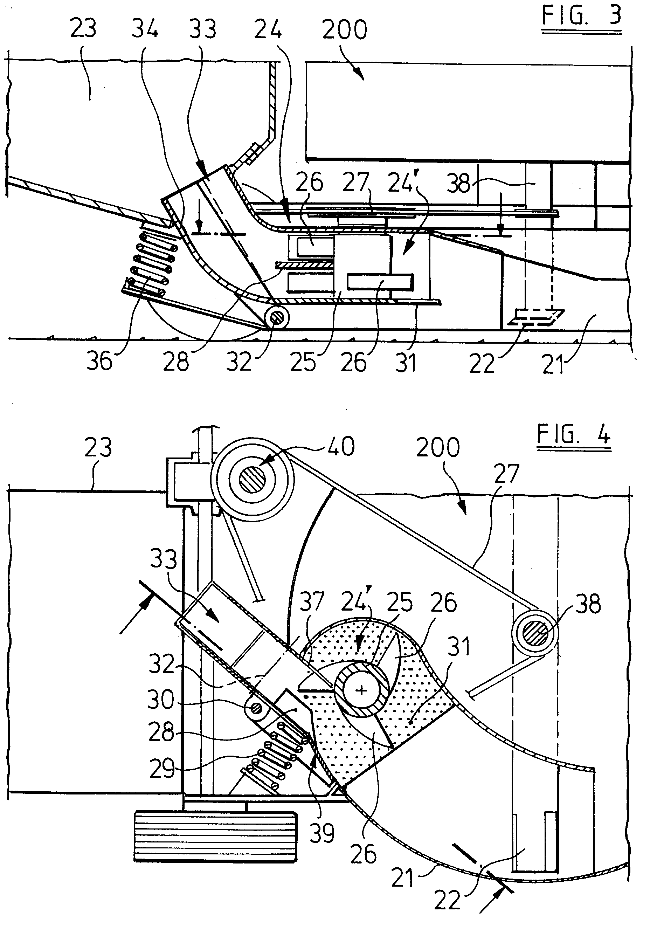

In den Figuren 3 und 4 ist die Seitenansicht und die entsprechende Draufsicht einer abgewandelten Ausführungsform einer Rotorpresse 24 gezeigt, die an bzw. größtenteils in dem Gehäuse 21 eines Rasenmähers 200 angeordnet ist. In dem Gehäuse 21 des Rasenmähers 200 laufen ebenso wie im ersten Ausführungsbeispiel von einer Antriebswelle 38 angetriebene Mähmesser 22 in einer horizontalen Umlaufebene um. Das gemähte Gras wird in einem Sammelbehälter 23 gesammelt, in den es durch die in einem zylindrischen Umlaufraum 24' rotierende Rotorpresse 24 gefördert wird. Die Rotorpresse 24 besteht hier aus einem trommelförmigen Zinkenrotor 25, an dem starre Zinken 26 angeordnet sind und deren Umlaufbahnen bei der Rotation den Umlaufraum 24' definieren. Bei der Umlaufbewegung durchlaufen die Zinken 26 einen kammartigen Abstreifer 37. Das Zentralrohr des Zinkenrotors 25 wird über einen horizontal verlaufenden, in Dreiecksform angeordneten Riementrieb 27 angetrieben, so daß auf diese Weise die Zentralwelle der Mähmesser 22, das Zentralrohr der Rotorpresse 24 und ein Fahrantrieb 40 für die Hinterachse des Rasenmähers 200 angetrieben werden kann.

Ebenso wie bei dem ersten Ausführungsbeispiel ist die Umlaufbahn der Mähmesser 22 und der zylindrische Umlaufraum 24' der Rotorpresse 24 durch eine im wesentlichen horizontal verlaufende Trennwand 31 voneinander getrennt (in Fig. 4 punktiert dargestellt). Das von den umlaufenden Mähmessern 22 abgeschleuderte Gras gelangt somit in die Rotorpresse 24 und kommt kurzzeitig auf der Trennwand 31 zu liegen, bevor es mit den umlaufenden Zinken 26 in einen Preßkanal 33 weitergefördert wird. Im vorderen Bereich des Förderkanals 33 ist hier an der Mantelfläche eine stegartige Rippe 28 vorgesehen, an der sich die umlaufenden Zinken 26 mit ihren Spitzen knapp vorbeibewegen und hierdurch das geförderte Gras zusätzlich verdichten und zerkleinern.

Es sei darauf hingewiesen, daß durch die Rippe 28 der Umlaufraum 24' der Rotorpresse 24 in zwei Förderebenen unterteilt wird, wobei im oberen Bereich nur ein einziger Zinken vorhanden ist, während im unteren Bereich zwei Zinken 26 vorgesehen sind, da sich naturgemäß im unteren Bereich auf der Trennwand 31 mehr Material ansammelt und somit rascher abgeführt werden soll.

Um Überlastungen zu vermeiden, ist die mit der Rippe 28 versehene äußere Kanalwandung 39 des Preßkanals 33 um eine Schwenkachse 30 gegen der Vorspannkraft einer Feder 29 nach außen geringfügig verschwenkbar (vgl. Fig. 4). Eine ähnliche Verschwenkbarkeit einer unteren Kanalwandung 34 schließt sich daran an, wobei jedoch die Schwenkachse 32 gegenüber der Schwenkachse 30 rechtwinklig verläuft, da hierdurch die Konizität des Preßkanals 33 verstellt wird, indem der Behälter 23 mit dem um die Schwenkachse 32 verschwenkbaren unteren Kanalteil 34 verbunden ist und von einer Druckfeder 36 abgestützt wird. Mit zunehmendem Füllungsgrad des Sammelbehälters 23 drückt das zunehmende Gewicht des Preßgutes den unteren Bereich 34 des Preßkanals 33 entgegen der Federkraft der Feder 36 nach unten und öffnet damit den Preßkanal 33 zunehmend, so daß der Preßdruck verringert wird.

Es sei darauf hingewiesen, daß der Sammelbehälter 23 aus festen Wänden bestehen kann, jedoch auch mit flexiblen Wänden als Beutel ausgebildet sein kann, der an das Ende des Förder- oder Preßkanals 33 angeschlossen wird.

Als Rotorpressen können Zinkenrotoren mit starren oder gesteuerten Zinken in liegender oder stehender Ausführung verwendet werden.

Bei Rasenmähern mit üblichen Schnittbreiten von ca. 40 bis 50 cm beträgt der den Umlaufraum 4', 24' definierende Durchmesser der Zinken 6, 26 etwa 150 mm und die Zinkenrotorhöhe etwa 70 mm (bzw. Zinkenrotorbreite bei liegender Anordnung). Wie oben beschrieben, kann die Drehzahl der Rotorpresse 4, 24 aufgrund der geringen Zinkenanzahl relativ hoch sein, nämlich etwa 1000 U/min, so daß kein Reduktionsgetriebe erforderlich ist.

## Patentansprüche

1. Rotorpresse (4, 24) für Rasenmäher (100, 200) mit wenigstens einem umlaufenden Mähmesser (2, 22), über dessen Umlaufbahn (2') zumindest teilweise ein Zinkenrotor (5, 25) mit wenigstens einem Zinken (6, 26) angeordnet ist, und mit einem sich an den Zinkenrotor anschließenden Preß-/Förderkanal (13, 33), der in einem Behälter (3, 23) mündet,
dadurch gekennzeichnet, daß
zwischen der Umlaufbahn (2') der Mähmesser (2, 22) und dem Umlaufraum (4', 24') des Zinkenrotors (5, 25) eine horizontal ausgerichtete Trennwand (11, 31) vorgesehen ist.

2. Rotorpresse nach Anspruch 1,
dadurch gekennzeichnet, daß
sich die Trennwand (11, 31) zur Antriebswelle (18, 38) des Mähmessers (2, 22) hin über das Zentrum des Zinkenrotors (5, 25) hinaus erstreckt und eine stufenlose Fortsetzung der unteren Kanalwandung (34) des Preß-/Förderkanals (13, 33) bildet.

3. Rotorpresse nach Anspruch 1 oder 2,
dadurch gekennzeichnet, daß
der Zinkenrotor (5, 25) aufrechtstehend innerhalb des Gehäuses (1, 21) des Rasenmähers (100, 200) angeordnet ist.

4. Rotorpresse nach einem der Ansprüche 1 bis 3,
dadurch gekennzeichnet, daß
der Zinkenrotor (5) in ihrer Relativlage gesteuerte Zinken (6) aufweist.

5. Rotorpresse nach einem der Ansprüche 1 bis 4,
dadurch gekennzeichnet, daß
der Zinkenrotor (5, 25) in einem Winkel von etwa 20 - 50° zur Bewegungsrichtung des Rasenmähers (100, 200) hinter der Antriebswelle (18, 38) der Mähmesser (2, 22) angeordnet ist.

6. Rotorpresse nach einem der Ansprüche 1 bis 5,
dadurch gekennzeichnet, daß
die Trennwand (11, 31) eine etwa radial zur Antriebswelle (18, 38) der Mähmesser (2, 22) im Gehäuse (1, 21) ausgerichtete Einlaufkante (12) aufweist.

7. Rotorpresse nach einem der Ansprüche 3 bis 6,
dadurch gekennzeichnet, daß
die Antriebswelle (18, 38) der Mähmesser (2, 22) und der Zinkenrotor (5, 25) durch einen in einer gemeinsamen Ebene liegenden Riementrieb (7, 27) angetrieben sind und vorzugsweise auch ein Fahrantrieb (40) vom Riementrieb (7, 27) mitangetrieben ist.

8. Rotorpresse nach einem der Ansprüche 1 bis 7,
dadurch gekennzeichnet, daß
der Preß-/Förderkanal (13, 33) unter einem Winkel von ca. 45° zur Bewegungsrichtung zum Sammelbehälter (3, 23) geführt ist.

9. Rotorpresse nach einem der Ansprüche 1 bis 8,
dadurch gekennzeichnet, daß
der Sammelbehälter (3, 23) mit einer unteren Kanalwandung (34) des Preß-/Förderkanals (33) verbunden ist und gegen eine Druckfeder (36) um eine Achse (32) vertikalbeweglich abgestützt ist.

10. Rotorpresse nach einem der Ansprüche 1 bis 9,
dadurch gekennzeichnet, daß
eine äußere Kanalwandung (39) im vorderen Bereich des Preß-/Förderkanals (13, 33) um eine Schwenkachse (30) gegen die Vorspannung einer Feder (29) beweglich gelagert ist.
